# EUROPÄISCHE PATENTSCHRIFT

(11) **EP 2 072 982 B1**
(45) Veröffentlichungstag und Bekanntmachung des Hinweises auf die Patenterteilung: **03.10.2012**
(21) Anmeldenummer: 08018216.5
(22) Anmeldetag: 17.10.2008
(51) Int. Cl.: G01K 17/06, F24D 19/10, G06F 1/32, G01D 4/00, G01K 1/02, G08C 17/02

(54) **Verfahren zum Betreiben eines elektronischen Verbrauchsmessgeraetes, insbesondere Heizkostenverteiler**
Method for operating a consumption measuring device, in particular heating cost distributor
Procédé de fonctionnement d'un appareil de mesure de consommation, notamment un répartiteur de coûts de chauffage

(30) Priorität: 19.12.2007 DE 102007061325
(43) Veröffentlichungstag der Anmeldung: 24.06.2009
(73) Patentinhaber: QUNDIS GmbH, 99974 Mühlhausen (DE)
(72) Erfinder: Schimske, Gerhard, 78247 Hilzingen (DE); Stauss, Gerold, 78050 Villingen-Schwenningen (DE)
(74) Vertreter: Liedtke, Klaus

(56) Entgegenhaltungen:
- EP-A1- 0 918 212
- EP-A2- 1 246 500
- WO-A1-03/034366
- DE-A1- 3 405 774
- DE-A1- 10 132 971
- DE-A1- 10 133 366
- DE-A1- 10 309 454

## Beschreibung

Die Erfindung betrifft ein Verfahren zum Betreiben eines elektronischen Verbrauchsmeßgerätes, insbesondere Heizkostenverteiler, nach dem Oberbegriff des Anspruchs 1 oder 2.

Bei der Erfindung geht es allgemein um elektronische Verbrauchsmeßgeräte im häuslichen Bereich, welche für die permanente Stromversorgung eine Energiequelle verwenden. Ein Anwendungsgebiet sind die sogenannten Heizkostenverteiler. Diese Heizkostenverteiler haben die Aufgabe, die abgegebene Wärmemenge eines Heizkörpers zu messen, um diese dann bei einem Mehrparteiengebäude anteilsmäßig umlegen zu können. Selbstverständlich kann das erfindungsgemäße Verfahren auch bei anderen Verbrauchsmeßgeräten eingesetzt werden.

Die Grundidee bei einem derartigen Verbrauchsmeßgerät besteht darin, daß die notwendigen Daten über die Zeit gespeichert werden. Dabei können die Daten von unterschiedlichen Datentypen ermittelt werden. Die so gespeicherten Daten werden dann unidirektional von Zeit zu Zeit periodisch an einen zentralen Datensammler per Funk übertragen.

Das Problem bei diesen batteriebetriebenen Verbrauchsmeßgeräten besteht darin, daß die Lebensdauer der Energiequelle beschränkt ist. Die Funkübertragung der Daten ist dann nicht mehr möglich, wenn die zur Verfügung stehende Energie der Energiequelle verbraucht ist.

Grundsätzlich können die Verbrauchsmeßgeräte die Daten von den unterschiedlichsten Datentypen aussenden. Im Hinblick auf die begrenzte Energiemenge der Batterie besteht das Problem darin, daß nicht alle Kunden alle Datentypen benötigen. Dennoch werden die Verbrauchsmeßgeräte mit allen möglichen Datentypen programmiert. Dies hat jedoch aufgrund der großen Datenmengen den Nachteil, daß bei einer vorgegebenen Lebensdauer des Verbrauchsmeßgerätes sowie im Hinblick auf die Kapazität der Batterie die Daten nur in großen Zeitabständen gesendet werden können. Dies hat jedoch den Nachteil, daß die Totzeiten sehr groß sind, in denen die mobilen Datensammler kein Signal empfangen können.

In der DE 101 32 971 A 1 werden ein Verfahren und eine Vorrichtung zur drahtlosen Ablesung von Verbrauchswerten aus Verbrauchsdatenerfassungsgeräten beschrieben. Die Verbrauchswerte werden im Verbrauchsdatenerfassungsgerät gespeichert und zu zufällig oder pseudozufällig bestimmten Sendezeitpunkten von dem Verbrauchsdatenerfassungsgerät ausgesendet. Dabei wird die mittlere Sendehäufigkeit in festlegbaren Zeiträumen variiert.

Aus der DE 103 09 454 A1 sind ein Verfahren und eine Vorrichtung zur Funkfernablesung von mehreren Verbrauchserfassungsgeräten bekannt. Die erfassten Verbrauchswerte werden von den jeweiligen Verbrauchserfassungsgeräten ausgesendet und von einer mobilen Datenerfassungseinheit bei der Begehung eines Ablesegebietes, insbesondere eines Gebäudes, empfangen. Ein Ableser wird von der Datenerfassungseinheit anhand einer Soll-Senderliste mit der Position der abzulesenden Verbrauchserfassungsgeräte im Ablesegebiet programmgesteuert durch das Ablesegebiet geführt, indem die Datenerfassungseinheit nach dem Empfang des Verbrauchswerts eines Verbrauchserfassungsgeräts unter Berücksichtigung der Soll-Senderliste die nächste Ableseposition ermittelt und anzeigt.

In der DE 101 33 366 A 1 werden ein Verfahren zur Erfassung von Zählerstandsdaten und ein Verbrauchsdaten-Erfassungssystem beschrieben. Zur Erfassung von Zählerstandsdaten von mehreren, an verschiedenen Orten vorgesehenen Verbrauchszählern werden während einer Datenerfassungstour die Zählerstandsdaten von den Verbrauchszählern in eine mobile Datenübernahmeeinrichtung in Zuordnung zu Identifikationsdaten des jeweiligen Verbrauchszählers übernommen. Dabei werden jeweils innerhalb eines bestimmten Zeitintervalls, das mit dem Zeitpunkt der Übernahme von Zählerstandsdaten von einem jeweiligen Verbrauchszähler in die Datenübernahmeeinrichtung beginnt, Identifikationsdaten des betreffenden Verbrauchszählers über ein Mobilfunksystem zu einer zentralen Datenerfassungsstelle gesendet.

Aus der DE 34 05 774 A1 ist eine Vorrichtung zum gemeinsamen Steuern eines Fluidstromes und Messen eines dem Fluidstrom und einer zweiten Größe proportionalen Wertes bekannt. Es sind ein Volumenstromregler und eine von einer externen physikalischen Größe gesteuerte Ventileinheit zum Sperren und Durchlassen des Fluidstromes sowie eine Elektronikeinheit zum Steuern der Ventileinheit und zur Durchführung und Auswertung der Energie- bzw. Wärmemengenmessung vorgesehen. Der Volumenstromregler ist als mehrstufiger Membranregler mit mindestens einer Regel- und einer Kompensationsstufe ausgebildet und mit der Ventileinheit hintereinander in einem gemeinsamen Durchflussgehäuse für den Fluidstrom angeordnet.

In der EP 0 918 212 A1 wird ein Verfahren zur Erfassung und Auswertung von temperaturabhängigen Verbrauchswerten oder Messwerten anderer physikalischer Größen beschrieben. Messwerte werden von Sensoren erfasst und an eine zentrale und rechnergestützt arbeitende Auswerteeinrichtung weitergeleitet. Die Weiterleitung der Messwerte erfolgt mittels Funkübertragung von mit den Sensoren verbundenen, eine Antenne aufweisenden Sendeeinrichtungen zu einer mit der Auswerteeinrichtung verbundenen Empfangseinrichtung. Die Sendeeinrichtungen werden von einem im Umfeld befindlichen, Energie umwandelnden Stromerzeuger mit elektrischer Energie versorgt.

Aus der WO 03/034366 A1 ist ein drahtloses Sensorsystem bekannt. Das Sensorsystem umfasst mindestens einen Spannungsgenerator zur Umwandlung nichtelektrischer Energie in elektrische Energie, mindestens einen dem Spannungsgenerator nachgeschalteten Energiespeicher, mindestens einen Spannungswandler, der so an den Energiespeicher angeschlossen ist, dass sein Ausgangssignal zum Betrieb einer Prozessteuerung geeignet ist, mindestens einen Sensor und mindestens einen Sender zur drahtlosen Aussendung von Sendetelegrammen, welche von der Prozessorsteuerung erzeugbar sind und welche mindestens einen Messwert des mindestens einen Sensors enthalten. Eine Timerschaltung ist in Abhängigkeit von einem Spannungsniveau des mindestens einen Energiespeichers triggerbar und aktiviert nach einem bestimmten Zeitabstand das Sensorsystem zur Aussendung mindestens eines Sendetelegramms.

In der EP 1 246 500 A2 wird ein Verfahren zum Abschalten zeitweise nicht benötigter Funktionen eines elektronischen Verbrauchserfassungsgeräts beschrieben. Das Abschalten wird in Abhängigkeit vom Wochentag und/oder der Tageszeit gesteuert.

Davon ausgehend liegt der Erfindung die Aufgabe zugrunde, bei einem Verfahren zum Betreiben eines elektronischen Verbrauchsmeßgerätes, insbesondere Heizkostenverteiler, ein optimales Energiemanagement für die Energiequelle zu schaffen.

Die technische Lösung ist gekennzeichnet durch die Merkmale im Kennzeichen des Anspruchs 1 oder 2.

Dadurch ist ein Verfahren zum Betreiben eines elektronischen Verbrauchsmeßgerätes, insbesondere Heizkostenverteiler, mit einem optimalen Energiemanagement für die Energiequelle geschaffen. Die Grundidee des erfindungsgemäßen Verfahrens besteht zum einen darin, nur diejenigen Datentypen mit ihren Daten zu übertragen, welche vom Kunden auch tatsächlich benötigt werden, und zum anderen darin, auf dieser Basis im Vorfeld der Inbetriebnahme des Verbrauchsmeßgerätes oder auch während des Betriebs des Verbrauchsmeßgerätes eine Berechnung dahingehend durchzuführen, in welchen Sendeintervallen die zur Verfügung stehende Kapazität der Energiequelle optimal, d.h. maximal genutzt werden kann. Dabei ist das Verbrauchsmeßgerät frei programmierbar, von welchen Datentypen die Daten tatsächlich ausgesendet werden sollen. In Abhängigkeit von den gewünschten Daten und der damit verbundenen notwendigen elektrischen Energie für die Funkdatenübertragung dieser Daten berechnet das Verbrauchsmeßgerät in Abhängigkeit von der zur Verfügung stehenden elektrischen Energie der Energiequelle, wie oft das Gerät die Daten aussenden kann, um die zur Verfügung stehende Energie maximal auszuschöpfen. Dies bedeutet im Ergebnis, daß sich an dem Datensammler nichts ändert. Dieser kann wie bisher verwendet werden. Jedoch sind die Verbrauchsmeßgeräte mit einer speziellen Software ausgestattet. Diese ermöglicht es, mit einer mobilen Funkauslesung in kurzen Zeitintervallen an die gewünschten Daten der ausgewählten Datentypen zu kommen. Dies kann flankierend auch durch Erhöhung der Datenrate sowie einer geeigneten Datenkompression unterstützt werden. Die heutigen stationären Datensammler fungieren am Mann getragen als mobile Funkausleseeinheiten, die somit eine schnelle Auslesung und Weiterleitung der Daten in eine Datenbank ermöglichen. Dies wird somit zum einen durch die Programmierbarkeit der Verbrauchsmeßgeräte sowie zum anderen durch die Möglichkeit des Verbrauchsmeßgerätes erreicht, daß dieses die passende Sendehäufigkeit errechnet, welche die Energiequelle zuläßt.

In einer erfindungsgemäßen Ausführungsform ist die Energiequelle eine Batterie. Im Gegensatz zu einem Akkumulator ist eine Batterie nicht wiederaufladbar, so daß die zur Verfügung stehende elektrische Energie dieser Batterie fest vorgegeben und damit begrenzt ist. Es wird in Abhängigkeit von der vorgegebenen Lebensdauer des Verbrauchsmeßgerätes sowie in Abhängigkeit von der in der Batterie zur Verfügung stehenden elektrischen Energie errechnet, mit welcher Sendehäufigkeit die Daten der ausgewählten Datentypen gesendet werden können. Der Grundgedanke hier besteht somit darin, daß die Sendehäufigkeit der Daten derart berechnet ist, daß nach der vorgegebenen Lebensdauer des Verbrauchsmeßgerätes die Energiequelle, nämlich die Batterie erschöpft ist.

In einer alternativen erfindungsgemäßen Ausführungsform ist die Energiequelle ein wiederaufladbarer Akkumulator oder Kondensator, welcher mit einer Spannungsquelle aufgeladen wird. Hier besteht die Grundidee darin, daß zwar aufgrund der Wiederaufladbarkeit des Akkumulators oder des Kondensators diese Energiequelle - vom Verschleiß abgesehen - unendlich lang betrieben werden kann, daß aber dennoch die über einen bestimmten Zeitraum gesehene durchschnittlich zur Verfügung stehende elektrische Energie begrenzt ist. Um aber auch hier das Maximum an Sendehäufigkeit ausschöpfen zu können, wird eine entsprechende Berechnung durchgeführt, und zwar so, daß über die gesamte Nutzungsdauer des Verbrauchsmeßgerätes gesehen immer genügend elektrische Energie zur Verfügung steht, damit die Elektronik arbeiten kann. Dabei wird diese elektrische Energie bis nahe an die Kapazitätsgrenze ausgeschöpft.

Gemäß der Weiterbildung in Anspruch 3 kann es sich bei der Spannungsquelle zum Aufladen der Energiequelle um eine Solarzelle oder um einen Thermogenerator handeln. Der Thermogenerator arbeitet auf dem sogenannten Seebeck-Effekt, wonach bei bestimmten Materialien eine Temperaturdifferenz eine elektrische Spannung erzeugt.

Die Weiterbildung gemäß Anspruch 4 stellt ein flexibles Energiemanagement dar. Denn die Solarzellen sowie die Thermogeneratoren liefern nicht immer durchgehend eine gleich große Energiemenge. Dies kann sogar jahreszeitlich schwanken. Wenn hier somit das System über einen bestimmten Zeitraum erkennt, daß die Spannungsquelle weniger oder mehr Energie zum Aufladen der Energiequelle zur Verfügung stellt, kann dadurch das Energiemanagement angepaßt werden, um auch so in bestimmten Zeitintervallen eine maximale Sendehäufigkeit zu erreichen.

In einer bevorzugten Weiterbildung werden gemäß Anspruch 5 die Daten unidirektional übertragen. Dies bedeutet, daß das Verbrauchsmeßgerät nach vorgegebenen Zeitintervallen die Daten der ausgewählten Datentypen aussendet, so daß sie dann vom insbesondere mobilen Datensammler empfangen werden können.

Grundsätzlich wäre es auch gemäß der Weiterbildung in Anspruch 6 denkbar, die Daten bidirektional zu übertragen. Dies bedeutet, daß der Datensammler das Verbrauchsmeßgerät durch ein Funksignal gewissermaßen aufweckt, so daß damit die Daten abgerufen werden und dann das Gerät die Daten der ausgewählten Datentypen übertragen kann. Sofern daher der Datensammler weiß, wie das Verbrauchsmeßgerät hinsichtlich Datentypen sowie insbesondere der errechneten Sendehäufigkeiten programmiert ist, kann dadurch das Energiemanagement für die Energiequelle des Verbrauchsmeßgerätes gleichermaßen optimiert werden.

Die Weiterbildung gemäß Anspruch 7 schlägt vor, daß die Programmierung des Verbrauchsmeßgerätes werksseitig erfolgt. Dies bedeutet, daß der Kunde mitteilt, welche Datentypen er benötigt. Auf diese Grundlage wird dann die Sendehäufigkeit berechnet. Alternativ ist es gemäß Anspruch 8 natürlich auch möglich, daß die Programmierung durch den Kunden direkt erfolgt. Hierzu weist dann das Verbrauchsmeßgerät eine entsprechende externe Datenschnittstelle auf.

Grundsätzlich ist es denkbar, daß bei der werksseitigen Programmierung des Verbrauchsmeßgerätes dem Verbrauchsmeßgerät gleich implementiert wird, wie die passenden Sendehäufigkeiten sind, welche die Energiequelle zuläßt. Die Weiterbildung gemäß Anspruch 9 schlägt hingegen vor, daß das Verbrauchsmeßgerät einen internen Prozessor aufweist, welcher die Berechnung der Zeitintervalle durchführt.

Die Weiterbildung gemäß Anspruch 10 schlägt vor, daß die Zeitintervalle nicht konstant lang sind, sondern daß unterschiedlich lange, insbesondere zwei unterschiedlich lange Zeitintervalle vorgesehen sind. Dabei liegt das kürzere Zeitintervall in dem zeitlichen Bereich, in dem nach Ablauf einer Abrechnungsperiode eine Ablesung zu erwarten ist. Dies hat den Vorteil, daß schon nach einer relativ kurzen Zeit der mobile Datensammler die Möglichkeit hat, die Daten zu empfangen. Außerhalb dieses kürzeren Zeitintervalls besteht jedoch nach wie vor die Möglichkeit, die Daten mittels des mobilen Datensammlers zu empfangen. Allerdings muß dort der mobile Datensammler dann vielleicht etwas warten.

In einer Weiterbildung hiervon schlägt Anspruch 11 vor, daß in den unterschiedlich langen Zeitintervallen unterschiedliche Datentypen ausgewählt werden. Dies bedeutet, daß in dem Zeitraum, in dem eine Ablesung nach Ablauf einer Abrechnungsperiode zu erwarten ist, der volle Datentypensatz gesendet wird im Vergleich zu dem längeren Zeitraum, wenn beispielsweise nur eine Zwischenablesung durchgeführt werden soll.

Als Alternative zu den unterschiedlich langen Zeitintervallen schlägt Anspruch 12 schließlich vor, daß gleich lange Zeitintervalle vorgesehen sind, daß jedoch in dem zeitlichen Bereich, in dem nach Ablauf einer Abrechnungsperiode eine Ablesung zu erwarten ist, größere Datenmengen von mehr Datentypen gesendet werden als sonst.

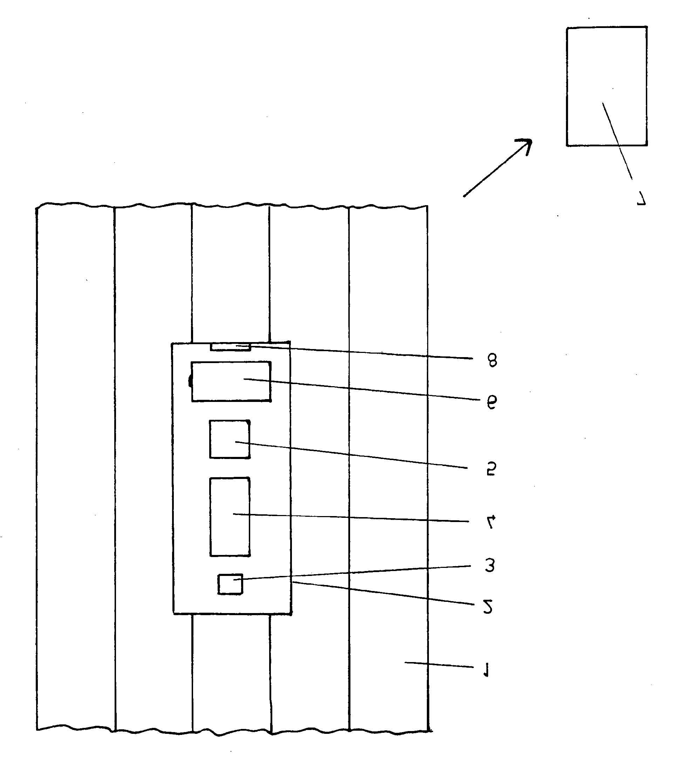

Ein Ausführungsbeispiel eines erfindungsgemäßen Verfahrens zu Betreiben eines elektronischen Verbrauchsmeßgerätes in Form eines sogenannten Heizkostenverteilers wird nachfolgend anhand der Zeichnung beschrieben. Diese zeigt in schematischer Weise eine entsprechende Anlage zum Betreiben des Verfahrens.

Die Zeichnung zeigt ausschnittsweise schematisch einen Heizkörper 1, an dem ein sogenannter Heizkostenverteiler 2 angebracht ist. Das Gehäuse dieses Heizkostenverteilers 2 ist abgenommen, so daß das Innere erkennbar ist.

Der Heizkostenverteiler 2 weist wenigstens einen Temperatursensor 3 auf, weiterhin einen elektronischen Prozessor 4, einen Sender 5 sowie schließlich für die elektrische Stromversorgung eine Energiequelle 6. Hier kann es sich um eine Batterie oder um aufladbare Akkumulatoren sowie Kondensatoren handeln. Die Aufladung kann durch Solarzellen sowie durch Thermogeneratoren erfolgen.

Weiterhin ist ein mobiler Datensammler 7 angedeutet. Dieser weist einen Empfänger auf.

Die Funktionsweise des Heizkostenverteilers ist wie folgt:
Zunächst wird über eine Programmierschnittstelle 8 der Heizkostenverteiler 2 kundenspezifisch so programmiert, von welchen Datentypen er die Daten benötigt.
Anschließend errechnet der Prozessor 4, mit welcher Sendehäufigkeit die Daten der ausgewählten Datentypen gesendet werden können, und zwar bei einer Batterie in Abhängigkeit von der vorgegebenen Lebensdauer des Heizkostenverteilers 2 sowie in Abhängigkeit von der in der Batterie zur Verfügung stehenden elektrischen Energie. Werden somit relativ viele Datentypen ausgewählt, so daß entsprechend viele Daten gesendet werden müssen, ist der Energiebedarf für diese hohe Sendetätigkeit größer. Die Folge davon ist, daß hier die Sendehäufigkeit entsprechend geringer ist. Umgekehrt verhält es sich, wenn nur die Daten von wenigen Datentypen gesendet werden sollen.
Somit sendet der Sender 5 des Heizkostenverteilers 2 entsprechend der errechneten Sendehäufigkeit unidirektional seine Daten. Befindet sich gerade ein mobiler Datensammler 7 für eine Ablesung in der Nähe, empfängt diese Datensammler 7 die Daten.

## Patentansprüche

1. Verfahren zum Betreiben eines elektronischen Verbrauchsmeßgerätes, insbesondere Heizkostenverteiler (2),
bei dem für die elektrische Stromversorgung eine elektrische Energiequelle (6) zur Verfügung steht,
bei dem Daten von unterschiedlichen Datentypen über die Zeit gespeichert werden und
bei dem die gespeicherten Daten von Zeit zu Zeit periodisch an einen Datensammler (7) per Funk übertragen werden,
**dadurch gekennzeichnet,**
**daß** von vornherein kundenspezifisch ausgewählt wird, von welchen Datentypen die Daten übertragen werden sollen, und
**daß** ausgehend von einem begrenzten Zeitraum sowie ausgehend von der in diesem Zeitraum zur Verfügung stehenden elektrischen Energie der Energiequelle (6) berechnet wird, nach welchem Zeitintervall die Daten der ausgewählten Datentypen gesendet werden, um die zur Verfügung stehende elektrische Energie der Energiequelle (6) maximal auszunutzen, wobei die Energiequelle (6) eine Batterie ist, deren zur Verfügung stehende elektrische Energie fest vorgegeben und damit begrenzt ist und wobei für die Berechnung der maximalen Ausnutzung der zur Verfügung stehenden elektrischen Energie der Batterie von der vorgegebenen Lebensdauer des Verbrauchsmeßgerätes ausgegangen wird, so daß in Abhängigkeit von der vorgegebenen Lebensdauer des Verbrauchsmeßgerätes sowie in Abhängigkeit von der in der Batterie zur Verfügung stehenden elektrischen Energie errechnet wird, mit welcher Sendehäufigkeit die Daten der ausgewählten Datentypen gesendet werden können, und zwar derart, daß nach der vorgegebenen Lebensdauer des Verbrauchsmeßgerätes die Batterie erschöpft ist.

2. Verfahren zum Betreiben eines elektronischen Verbrauchsmeßgerätes, insbesondere Heizkostenverteiler (2),
bei dem für die elektrische Stromversorgung eine elektrische Energiequelle (6) zur Verfügung steht,
bei dem Daten von unterschiedlichen Datentypen über die Zeit gespeichert werden und
bei dem die gespeicherten Daten von Zeit zu Zeit periodisch an einen Datensammler (7) per Funk übertragen werden,
**dadurch gekennzeichnet,**
**daß** von vornherein kundenspezifisch ausgewählt wird, von welchen Datentypen die Daten übertragen werden sollen, und
**daß** ausgehend von einem begrenzten Zeitraum sowie ausgehend von der in diesem Zeitraum zur Verfügung stehenden elektrischen Energie der Energiequelle (6) berechnet wird, nach welchem Zeitintervall die Daten der ausgewählten Datentypen gesendet werden, um die zur Verfügung stehende elektrische Energie der Energiequelle (6) maximal auszunutzen, wobei die Energiequelle (6) ein wiederaufladbarer Akkumulator oder Kondensator ist, dessen über den bestimmten Zeitraum durchschnittlich zur Verfügung stehende elektrische Energie begrenzt ist und welcher mit einer Spannungsquelle aufgeladen wird, und wobei für die Berechnung der maximalen Ausnutzung der zur Verfügung stehenden aufgeladenen elektrischen Energie des Akkumulators oder Kondensators, welche bis nahe an eine Kapazitätsgrenze ausgeschöpft wird, von dem bestimmten Zeitraum ausgegangen wird, in welchem zu erwarten ist, daß der Akkumulator oder Kondensator genügend elektrische Energie besitzt, um dauerhaft den notwendigen Strom zu liefern, so daß über den gesamten Zeitraum des Verbrauchsmeßgerätes immer genügend elektrische Energie zur Verfügung steht und ein Maximum an Sendehäufigkeit ausgeschöpft wird.

3. Verfahren nach Anspruch 2,
**dadurch gekennzeichnet,**
**daß** die Spannungsquelle zum Aufladen der Energiequelle (6) eine Solarzelle oder ein Thermogenerator ist.

4. Verfahren nach Anspruch 2 oder 3,
**dadurch gekennzeichnet,**
**daß** die Berechnungen und/oder eine Veränderung der Zeiträume davon abhängig gemacht werden, in welchem Maße die Spannungsquelle in der Lage ist, die Energiequelle (6) aufzuladen.

5. Verfahren nach einem der Ansprüche 1 bis 4,
**dadurch gekennzeichnet,**
**daß** die Daten unidirektional übertragen werden.

6. Verfahren nach einem der Ansprüche 1 bis 4,
**dadurch gekennzeichnet,**
**daß** die Daten bidirektional übertragen werden.

7. Verfahren nach einem der Ansprüche 1 bis 6,
**dadurch gekennzeichnet**
**daß** die Programmierung des Verbrauchsmeßgerätes werksseitig durchgeführt wird, wobei der Kunde mitteilt, welche Daten er benötigt.

8. Verfahren nach einem der Ansprüche 1 bis 6,
**dadurch gekennzeichnet,**
**daß** die Programmierung des Verbrauchmeßgerätes durch den Kunden durchgeführt wird wobei das Verbrauchsmeßgerät eine entsprechende externe Datenschnittstelle aufweist, mit der der Kunde mitteilt, welche Daten er benötigt.

9. Verfahren nach einem der vorhergehenden Ansprüche,
**dadurch gekennzeichnet,**
**daß** zur Berechnung des Zeitintervalls ein interner Prozessor (4) des Verbrauchsmeßgeräts verwendet wird.

10. Verfahren nach einem der Ansprüche 1 bis 9,
**dadurch gekennzeichnet,**
**daß** unterschiedlich lange Zeitintervalle verwendet werden, wobei das kürzeste Zeitintervall in dem zeitlichen Bereich liegt, in dem nach Ablauf einer Abrechnungsperiode eine Ablesung zu erwarten ist.

11. Verfahren nach Anspruch 10,
**dadurch gekennzeichnet,**
**daß** in den unterschiedlich langen Zeitintervallen unterschiedliche Datentypen ausgewählt werden.

12. Verfahren nach einem der Ansprüche 1 bis 9,
**dadurch gekennzeichnet,**
**daß** gleich lange Zeitintervalle verwendet werden, wobei in dem zeitlichen Bereich, in dem nach Ablauf einer Abrechnungsperiode eine Ablesung zu erwarten ist, mehr Datenmengen gesendet werden als sonst.

## Claims

1. Procedure for operating an electronic consumption meter including but not limited to a heat cost allocator (2),
in which an electric power source (6) is available for electric power supply,
in which data of different data types are stored over time and
in which the data stored are transmitted via radio to a data collector (7) periodically from time to time,
**characterized in that**
a customer-specific selection of the data types from which data should be transmitted is made from the outset, and
**in that**, based on a limited period of time and based on the electrical energy available from the power source (6) during such period of time, a calculation is made to determine the time interval according to which the data of the selected data types will be sent in order to make maximum use of the electrical energy available from the power source (6), while the power source (6) is a battery the available electrical energy of which is predefined and thus limited and while the calculation of the maximum utilisation of the electrical energy available from the battery is based on the predefined useful life of the consumption meter such that, depending on the predefined useful life of the consumption meter and depending on the electrical energy available in the battery, a calculation is made to determine the transmission frequency at which the data of the selected data tapes may be transmitted, i.e., in such a way that the battery is used up after the predefined useful life of the consumption meter.

2. Procedure for operating an electronic consumption meter including but not limited to a heat cost allocator (2),
in which an electric power source (6) is available for electric power supply,
in which data of different data types are stored over time and
in which the data stored are transmitted via radio to a data collector (7) periodically from time to time,
**characterized in that**
a customer-specific selection of the data types from which data should be transmitted is made from the outset, and
**in that**, based on a limited period of time and based on the electrical energy available from the power source (6) during such period of time, a calculation is made to determine the time interval according to which the data of the selected data types are sent in order to make maximum use of the electrical energy available from the power source (6), while the power source (6) is a rechargeable battery or capacitor whose electrical energy available on average during the specific period of time from is limited and which is recharged using a voltage source, and while the calculation of the maximum utilisation of the charged electrical energy of such battery or capacitor, which will be used up until near to a capacity limit, is based on the specific period of time in which the battery or capacitor is expected to have sufficient electrical energy to constantly provide the current required such that, throughout the entire period of time of the consumption meter, sufficient electrical energy is always available and a maximum of transmission frequency is used.

3. Procedure as claimed in claim 2,
**characterized in that**
the voltage source for charging the power source (6) is a solar cell or a thermoelectric generator.

4. Procedure as claimed in claims 2 or 3,
**characterized in that**
the calculations and/or a modification of the periods of time are made dependent on the measure to which the voltage source is able to charge the power source (6).

5. Procedure as claimed in any claim 1 through 4,
**characterized in that**
the data are transmitted unidirectionally.

6. Procedure as claimed in any claim 1 through 4,
**characterized in that**
the data are transmitted bidirectionally.

7. Procedure as claimed in any claim 1 through 6,
**characterized in that**
the programming of the consumption meter is done at the factory while the customer communicates which data the customer needs.

8. Procedure as claimed in any claim 1 through 6,
**characterized in that**
the programming of the consumption meter is done by the customer while the consumption meter has a corresponding external data interface used by the customer to communicate which data the customer needs.

9. Procedure as claimed in any preceding claim,
**characterized in that**
an internal processor (4) of the consumption meter is used for calculating the time interval.

10. Procedure as claimed in any claim 1 through 9,
**characterized in that**
the time intervals used have different lengths while the shortest time interval is within the range of time in which a readout is anticipated after the expiry of a billing period.

11. Procedure as claimed in claim 10,
**characterized in that**
different data types are selected in the time intervals having different lengths.

12. Procedure as claimed in any claim 1 through 9,
**characterized in that**
time intervals of equal length are used while higher data quantities than otherwise are transmitted within the range of time in which a readout is anticipated after the expiry of a billing period.

## Revendications

1. Procédé de mise en service d'un appareil électronique de mesure de consommation, en particulier d'un répartiteur des coûts de chauffage (2),
où une source d'énergie (6) électrique est disponible pour l'alimentation en courant électrique, où des données de différents types de données sont mémorisées au fil du temps, et où les données mémorisées sont périodiquement transmises par radiocommunication à un collecteur de données (7),
**caractérisé**
**en ce que** les types de données des données à transmettre sont sélectionnés au préalable, spécifiquement au client, et
**en ce qu'**à partir d'un laps de temps limité et de l'énergie électrique de la source d'énergie (6) disponible pendant ce laps de temps, l'intervalle temporel suivant lequel les données des types de données sélectionnés doivent être adressées est calculé, afin d'exploiter de manière optimale l'énergie électrique de la source d'énergie (6) disponible, la source d'énergie (6) étant une pile dont l'énergie électrique disponible est fixement définie et par conséquent limitée, et la durée de vie définie de l'appareil de mesure de consommation étant prise pour base de calcul de l'exploitation optimale de l'énergie électrique rendue disponible par la pile, de manière à pouvoir calculer, en fonction de la durée de vie définie de l'appareil de mesure de consommation et en fonction de l'énergie électrique disponible dans la pile, la fréquence d'émission à laquelle les données des types de données sélectionnés peuvent être adressées, et cela de telle manière que la pile soit épuisée à la fin de la durée de vie définie pour l'appareil de mesure de consommation.

2. Procédé de mise en service d'un appareil électronique de mesure de consommation, en particulier d'un répartiteur des coûts de chauffage (2),
où une source d'énergie (6) électrique est disponible pour l'alimentation en courant électrique,
où des données de différents types de données sont mémorisées au fil du temps, et
où les données mémorisées sont périodiquement transmises par radiocommunication à un collecteur de données (7),
**caractérisé**
**en ce que** les types de données des données à transmettre sont sélectionnés au préalable, spécifiquement au client, et
**en ce qu'**à partir d'un laps de temps limité et de l'énergie électrique de la source d'énergie (6) disponible pendant ce laps de temps, l'intervalle temporel suivant lequel les données des types de données sélectionnés doivent être adressées est calculé, afin d'exploiter de manière optimale l'énergie électrique de la source d'énergie (6) disponible, la source d'énergie (6) étant un accumulateur ou un condensateur rechargeable, dont l'énergie électrique disponible en moyenne sur le laps de temps déterminé est limitée, et qui est chargé par une source de tension électrique, le laps de temps déterminé pendant lequel il est escompté que l'accumulateur ou le condensateur détient suffisamment d'énergie pour fournir le courant exigé de manière continue étant pris pour base de calcul de l'exploitation optimale de l'énergie électrique disponible, chargée dans l'accumulateur ou le condensateur, laquelle est consommée pratiquement jusqu'à une limite de capacité, de manière à rendre l'énergie électrique toujours suffisamment disponible sur tout le laps de temps pour l'appareil de mesure de consommation, et à permettre une fréquence d'émission optimale.

3. Procédé selon la revendication 2,
**caractérisé**
**en ce que** la source de tension électrique pour la charge de la source d'énergie (6) est une cellule photovoltaïque ou un thermogénérateur.

4. Procédé selon la revendication 2 ou la revendication 3,
**caractérisé**
**en ce que** les calculs et/ou une variation des laps de temps sont rendus dépendants de l'aptitude qu'a la source de tension électrique à charger la source d'énergie (6).

5. Procédé selon l'une des revendications 1 à 4,
**caractérisé**
**en ce que** les données sont transmises unidirectionnellement.

6. Procédé selon l'une des revendications 1 à 4,
**caractérisé**
**en ce que** les données sont transmises bidirectionnellement.

7. Procédé selon l'une des revendications 1 à 6,
**caractérisé**
**en ce que** la programmation de l'appareil de mesure de consommation est effectuée départ usine, le client communiquant les données dont il a besoin.

8. Procédé selon l'une des revendications 1 à 6,
**caractérisé**
**en ce que** la programmation de l'appareil de mesure de consommation est effectuée par le client, l'appareil de mesure de consommation comportant une interface externe de données correspondantes, par l'intermédiaire de laquelle le client communique les données dont il a besoin.

9. Procédé selon l'une des revendications précédentes,
**caractérisé**
**en ce qu'**un processeur (4) interne de l'appareil de mesure de consommation est utilisé pour le calcul de l'intervalle temporel.

10. Procédé selon l'une des revendications 1 à 9,
**caractérisé**
**en ce que** des intervalles temporels de longueur différente sont appliqués, l'intervalle temporel le plus court étant situé dans la plage temporelle où une lecture est escomptée à l'issue d'une période de facturation.

11. Procédé selon la revendication 10,
**caractérisé**
**en ce que** des types des données différents sont sélectionnés dans les intervalles temporels de longueur différente.

12. Procédé selon l'une des revendications 1 à 9,
**caractérisé**
**en ce que** des intervalles temporels de même longueur sont appliqués, des débits de données supérieurs à ceux habituellement adressés étant adressés dans la plage temporelle où une lecture est escomptée à l'issue d'une période de facturation.
